# EUROPEAN PATENT SPECIFICATION

(11) **EP 2 382 862 B1**
(45) Date of publication and mention of the grant of the patent: **03.04.2013**
(21) Application number: 09825665.4
(22) Date of filing: 14.08.2009
(51) Int. Cl.: A47G 7/04, A01G 9/12

(54) **WALL-MOUNTED SET OF ORNAMENTAL PLANT POTS**
WANDMONTIERTER SATZ VON ZIERPFLANZENTÖPFEN
ENSEMBLE MURAL DE RÉCIPIENTS À VÉGÉTATION ORNEMENTALE

(30) Priority: 13.11.2008 BR MU8802729 U
(43) Date of publication of application: 02.11.2011
(73) Proprietor: Mesiara, Gislene Medeiros, São Paulo - SP (BR)
(72) Inventor: Mesiara, Gislene Medeiros, São Paulo - SP (BR)
(74) Representative: KATZAROV S.A.
(86) International application number: PCT/BR2009/000268
(87) International publication number: WO 2010/054450

(56) References cited:
- BR-U- MU8 502 530
- BR-U- MU8 602 645
- CN-Y- 201 042 146
- JP-A- 2005 270 052
- JP-A- 2007 274 948
- US-A- 3 949 524
- US-A- 6 003 824

## Description

The present patent refers to a vertical garden assembly, concerned with the field of gardening, more precisely for use in the decoration of internal and external environments by means of adequately suspended pots, to which an original constructive arrangement is given, aiming to reach a different functional option from the models previously developed by the inventor see e.g. BR MU 36 02645 U.

This is a complementary landscape solution for vertical gardens, allowing the safe and functional hanging suspension of pots for plants in a wide range of shapes and types.

Therefore, the present patent is an improvement, especially designed and developed to reach a widely practical solution bringing in a range of advantages, both in its use and manufacture, not requiring any knowledge beyond already existing gardening skills for the use of the present set of ornamental plant pots, since plants, as planted in the pots connected to the support, may be vertically located on walls, not requiring the use of chains or apparent metal structures.

Another object of the present patent is an improvement applied to a set of ornamental plant pots for vertical gardens with low cost for its industrial viability, allied to the requirements of strength, safety and practical use, thus offering the consumer an additional option in the market that presents similar products.

Most houses, offices and stores are currently ornamented with some kind of plant or natural foliage, so as to offer peacefulness and naturalness to internal or external environments.

As known, especially by landscapers and decorators, the most widely used and preferred model to arrange plants in such environments is a suspending support, especially to keep the floor area free for transit.

Ornamental plants are put in pots made of certain tree ferns or clay containing soil, which are later housed in supports, generally a plastic base similar to a "plate with wings", from which side chains are joined to a ring, which is then hung to hook at the end of a shaft.

One of the main inconveniences of said models is, first of all, the fact that most pots and devices inconveniently occupy useful spaces in corridors, rooms and others, frequently with limitations in their free space.

Furthermore, most devices require water reservoirs, which have become a public health problem for creating a favorable environment to the appearance of dengue mosquito larvae and offering easy access and a favorable environment to the reproduction of dipterans.

Furthermore, it is common sense that the use of ornamental plants and their aesthetically impression to decorative trends should not be suppressed.

From the above verifications, the inventor has developed a set of ornamental plant pots according to claim 1, whose constructive arrangement is applied to a vertical structure, fixed in place by means of a screwed support, optionally being peripherally and orthogonally provided with projecting laterals (with relation to the vertical structure), rectangular on its front side, circular or with another geometrically regular or irregular shape as more appropriate to the space where it is introduced, with the vertical flat structure containing a frame over the perimeter of the projecting lateral.

Said disposition was originally developed incorporating an automatic irrigation system by means of a pressure pump installed within a frame, so as to provide the fall of water throughout a fiber panel that contained the plants. Said disposition eliminated the need to manually water the plants.

However, concerning arrangements in the form of pots, plastic base supports suspended by chains are still used and, besides their ugly appearance, they do not allow a different and more versatile arrangement of the plants without the inconvenient and troublesome use of various kinds of supports.

From the perception of this need, the inventor went through the development of other supports for plants, applicable to a vertical flat structure, internally provided with a plate, wire net or even screen, evolving to an assembly provided with other improvements to solve a few limitations, among which can be highlighted: the need to safely lock the pot to the support, the possibility to install the supports in modules, to fix the support with a given distance from the wall, among others.

Therefrom, the inventor, aiming to improve vertical garden arrangements and better meet the different requirements and demands to make vertical gardens, has developed the present set of ornamental plant pots for gardens, conceived from the construction of a support in the shape of a quadrangular screen, preferably from rigid maritime grade aluminum wires, which are intertwined or welded, and with black electrostatic covering, at whose vertexes perforated "L" shaped projections are provided with appropriate spacing to fix the support to walls and panels, by means of stainless steel screws. Said spacing aims to avoid the occurrence of projections and dripping of water directly to the wall, causing undesired infiltrations.

On the wires one hangs various trapezoidal/ellipsoidal pots, preferably of polymer containing black pigment and with a grade of protection against UVA and UVB rays, provided on their back part with "L" shaped wings with one or two locking projections, able to fit into the back screen and keep the pots completely stable and fixed against the occurrence of winds.

Therefore, the user may place and remove the pots from the back screen with no need to release any kind of fixing element. In other particular aspect, the present arrangement allows fixing the pots so as to keep them from being taken by thieves or vandals, when installed in places with free public access. Furthermore, the maintenance of plants is easily performed, since it does not require the back plate, nor all pots at the same time to be taken off the wall. It is optional to use an automated irrigation system to make the irrigation of the plants easier.

The inventor has adopted, with no limitation to only this alternative, the black color for elements forming the assembly and also as a background color for the surfaces covered by the vertical garden, to create the aesthetical effect of an infinite background. This detail is important when the vertical garden is in use, when possible failure in vegetation coverage cannot be easily seen. It is also important to remark that the inventor has adopted as preferable materials which are not perishable and are resistant to weather conditions, such as maritime grade aluminum with black electrostatic covering and plastic with UVA and UVB protection aiming to reach longer use of the assembly. Another advantage of the present patent refers to the easy disassembly and re-assembly of the set of ornamental plant pots, which is a novel condition in the conception of vertical gardens, offering cost savings and practical use to the consumer, who can re-use all parts of the set of ornamental plant pots. On the other hand, pot mobility allows creating various geometrical patterns, not requiring the pots to be symmetrically distributed, since the back screen allows the free movement of the vase "L" shaped wings along various points on the screen.

Furthermore, the present arrangement allows the use of a water deviation element coupled to the bottom of the pot, keeping the water percolated through the pot holes from being directed to inside of the subsequent pot. This detail matters in cases where plants with different water requirements are used, i. e. to avoid the water percolated from pots with plants which are more frequently watered going to plants requiring water less frequently.

Therefore, the present set of ornamental plant pots results in an assembly with unique characteristics, obtained from an appropriate manufacturing design concept.

Since said constructive set of ornamental plant pots shows the beauty and ornamental versatility of plants, occupying only limited space, it is possible to use vegetal decoration with a wide range of species and kinds of plants and flowers, appropriately ornamenting ambiences with restricted internal space, also making use of beams, columns and walls with narrow or small dimensions.

Preferably conceived in black color and applied to duly waterproofed surfaces, also in black color, the assembly is discreet, non reflexive and almost imperceptible when the pots are placed with less spacing.

Therefore, the present set of ornamental plant pots for vertical gardens has been designed aiming to employ the lowest possible number of parts, conveniently configured and arranged to perform its functions with unique efficiency and versatility.

The present patent presents a practical and innovative improvement in a support for plant decoration, developed according to the state of the art, thus allowing a widely variety of uses.

Its innovative shape allows to reach an excellent functional level, offering high durability and versatility, having been mainly created to provide better fixing of the plants, more stability of the pots against winds and a freeing distance from the occurrence of humidity in the region where the back screen is fixed

The set of ornamental plant pots at issue is extremely easily built, being also easily manufactured, with excellent practical and functional results, thus offering an innovative conception over known models.

Projected with an innovative design, it results in a harmonic set with a peculiar and especially unique appearance, wherein the model is highlighted for its versatility and easy of use, besides the constructive aspect.

For better understanding of how the " SET OF ORNAMENTAL PLANT POTS" as presented herewith is constituted, the attached drawings represent a preferred embodiment, are as follows:

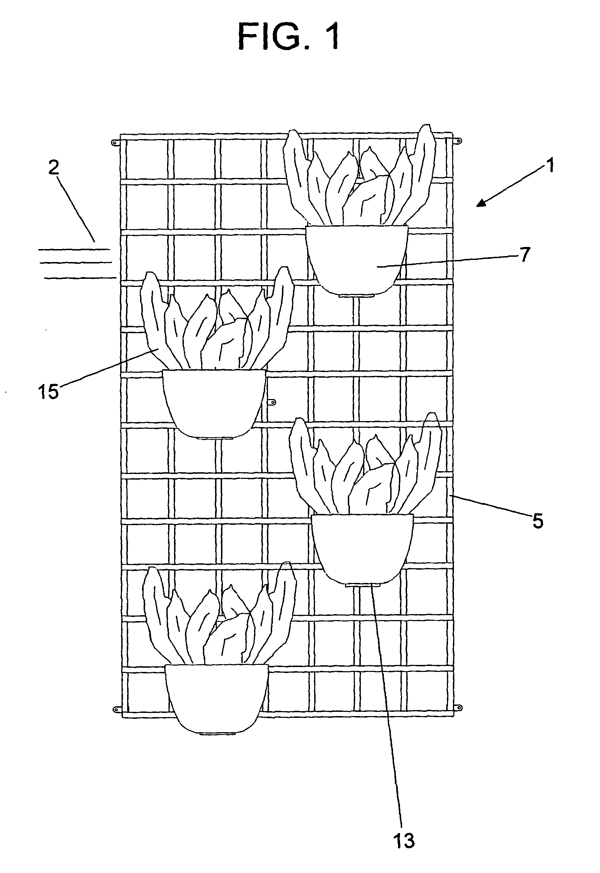

FIG. 1 shows a front view of the assembly of vertical support and pots, showing the frontal arrangement of vases containing plants;

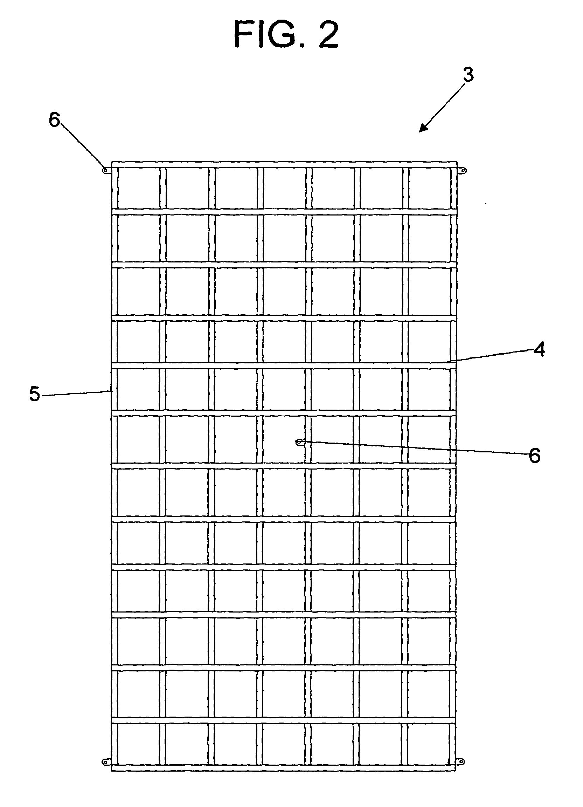

FIG. 2 shows a front view of the vertical support, showing its structure and the location of the perforated "L" shaped projections;

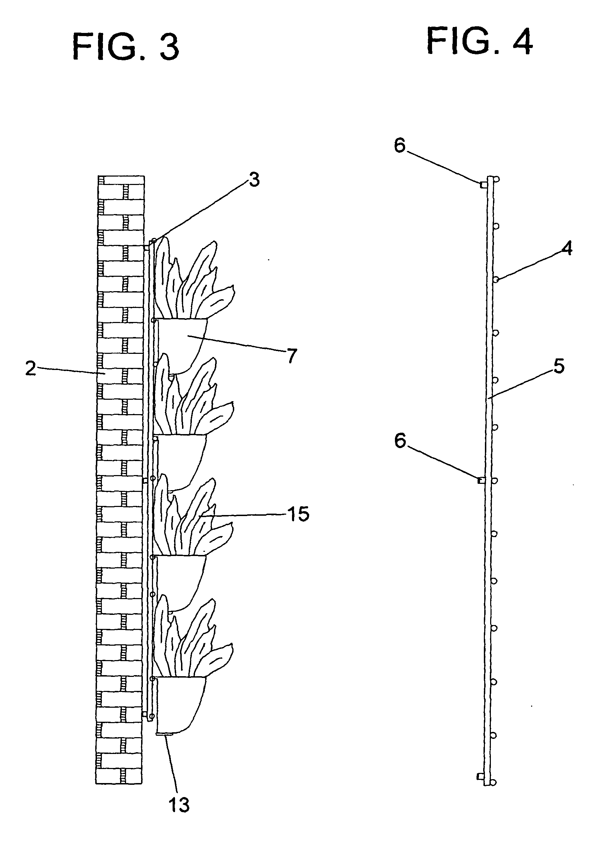

FIG. 3 shows a side view of the assembly of vertical support and pots, showing the final arrangement of pots containing plants;
FIG. 4 shows a side view of the vertical support;

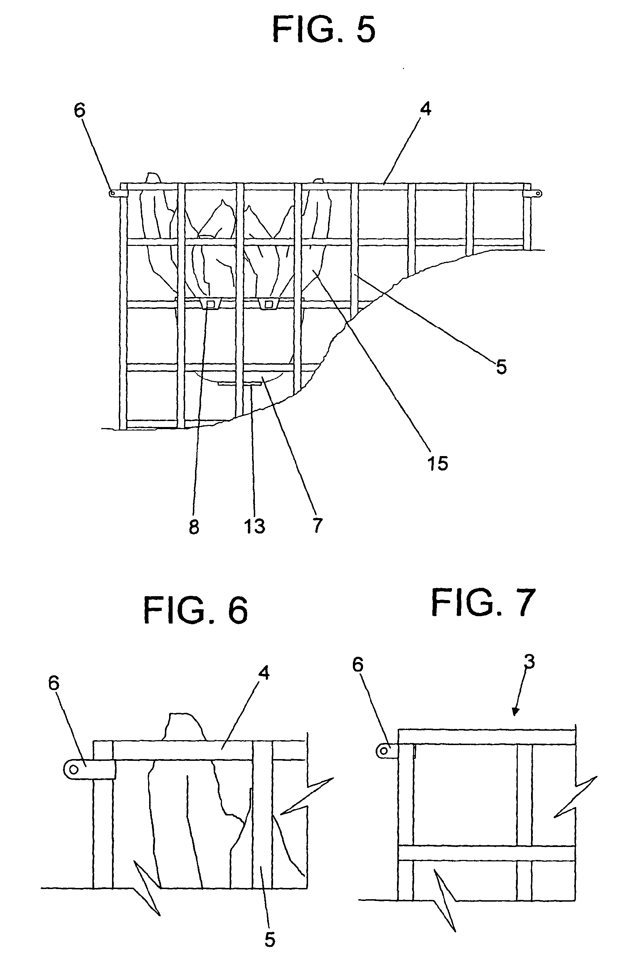

FIG. 5 shows a partial end view of the assembly of vertical support and pots, showing the fitting of "L"-shaped wings as contained in the pot over one of the horizontal rigid wires of the screen;
FIG. 6 shows an enlarged partial front view of the vertical support, showing the arrangement of one of the perforated "L" shaped projections contained in the vertex of the support;
FIG. 7 shows an enlarged partial end view of the assembly of vertical support and pots, showing one of the perforated "L" shaped projections of the support positioned in the end region of the vertical rigid wires of the screen, near the vertex;

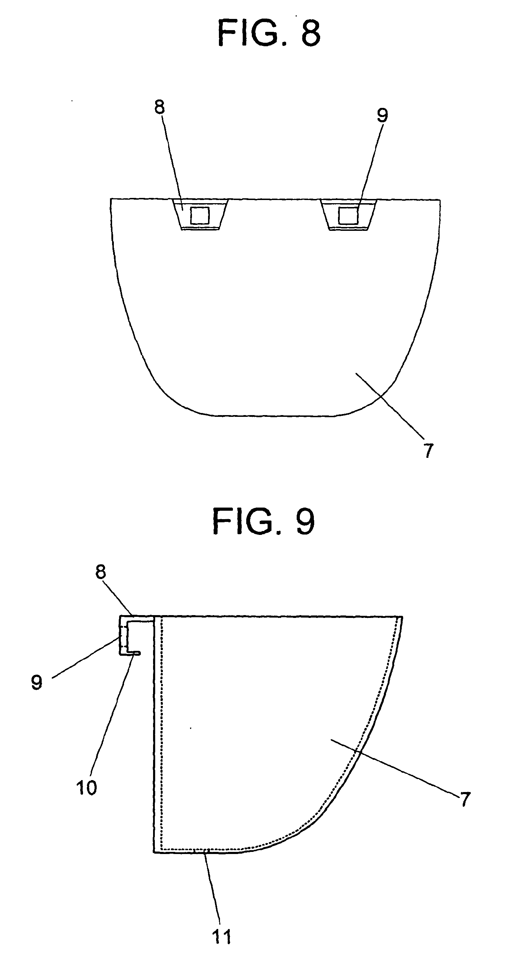

FIG. 8 shows an end view of the pot, showing fixing "L"-shaped wings;
Fig. 9 shows a side cut view of the pot, showing the fixing "L"-shaped wings;

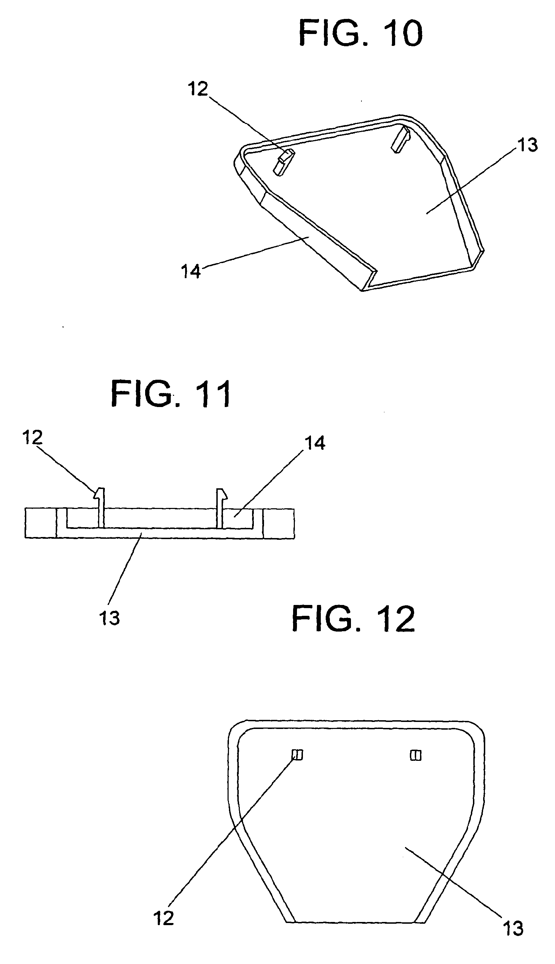

FIG. 10 shows a perspective view of the water pathway;
FIG. 11 shows an end view of the water pathway;
FIG. 12 shows an upper view of the water pathway;

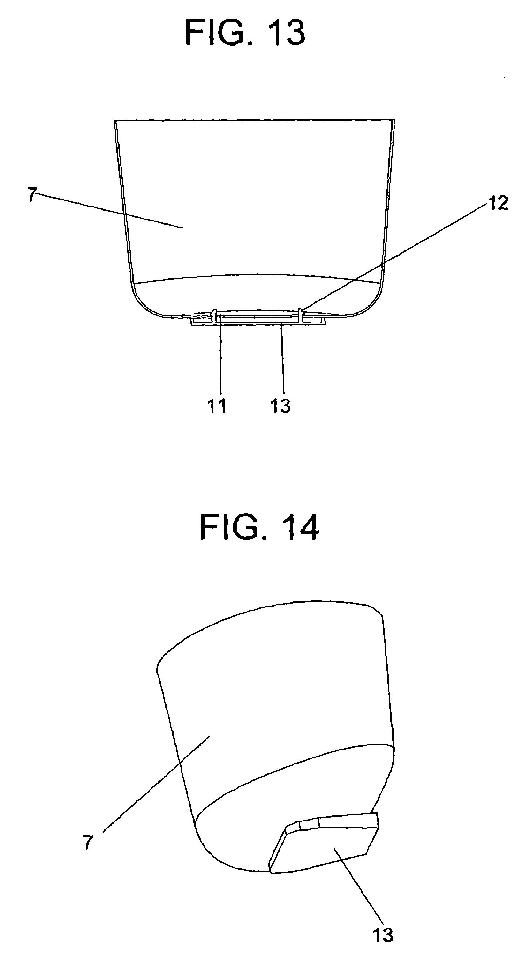

FIG. 13 shows a crosswise cut end view of the pot linked to the water pathway, showing the fitting of the support pins to the holes of the pot;
FIG. 14 shows a perspective lower side view of the vase with the water pathway.

Following the illustrations of the above listed Figures, the set of ornamental plant pots, object of the present patent, as applied to an assembly (1) which may be directly fixed to a wall (2) or a vertical flat structure by means of screws, being previously waterproofed by means of an asphalt blanket and/or polymeric mortar in black color, besides collecting elements for the exudation or wetting water.

Said assembly (1) is formed by a quadrangular screen (3) constituted by rigid horizontal (4) and vertical (5) wires of maritime grade aluminum rectangularly welded to themselves, forming two layers, subsequently covered with electrostatic painting, provided with perforated "L" projections (6), fixed to the vertexes and to the center, over the vertical rigid wires (5).

Horizontal rigid wires (4) located throughout the screen support trapezoidal/ellipsoidal pots (7), by means of one or two "L"-shaped wings (8), in solidarity to their back part, containing central rectangular holes (9) and provided with locking projections (10) at their ends.

Trapezoidal/ellipsoidal pots (7) are typically made of a polymer resistant to UVA and UVB radiation, having holes (11) at their lower ends, and inside, where support pins (12) of a trapezoidal base (13) are fitted, said base provided with rims (14) around the lateral and frontal perimeter. Said configuration has the purpose to deviate percolated water from inside the pot (7), after being sprinkled over the plants (15) therein, manually or by an automated temporized system. Said water excess projecting through the holes drips within the trapezoidal base (13), directing it to the lower end region of the pot (7), on the plane of the quadrangular screen (3), avoiding dripping and running out through its bottom.

One can therefore conclude from the above that the " SET OF ORNAMENTAL PLANT POTS" at issue is characterized as a very useful landscaping accessory, presenting all practical and functional qualities fully justifying the requested protection.

Despite the disclosure of the above intended embodiment, it will be evident for the person skilled in the art that changes in the embodiment may be made, within the scope of the invention defined in the attached claim.

## Claims

1. SET OF ORNAMENTAL PLANT POTS mounted to an assembly (1) to be fixed to a wall (2) or a vertical flat structure optionally previously waterproofed by means of an asphalt blanket and/or polymeric mortar and comprising exudation or wetting water collection elements; **characterized by** said assembly (1) being constituted by a quadrangular screen (3), formed by horizontal (4) and vertical (5) rigid wires rectangularly fixed to one another, being provided with perforated "L"-shaped projections (6), fixed to the vertexes and the center, over the vertical rigid wires (5); the horizontal rigid wires (4) support trapezoidal or ellipsoidal pots (7) located throughout the screen by means of one or two "L"-shaped wings (8), present in the back perimeter of each pot (7), each wing (8) containing a central rectangular hole (9) and being provided with a locking projection (10) at its end, wherein each said trapezoidal or ellipsoidal pot (7) has holes (11) at its lower end within which support pins (12) of a trapezoidal base (13) are fitted, the base (13) being provided with rims (14) along its lateral and frontal perimeters, so as to direct water percolated through the holes (11) on the plane of the quadrangular screen (3), after spraying over plants (15) in the pots (7).

## Patentansprüche

1. Satz von Zierpflanzentöpfen, montiert auf einem Zusammenbau (1) zur Befestigung an einer Wand (2) oder an einer flachen senkrechten Fläche, wahlweise vorher abgedichtet mittels einer Asphaltdecke und/oder eines Polymermörtels und mit Exsudationselementen oder Spritzwassersammelelementen; **dadurch gekennzeichnet, dass** der besagte Zusammenbau (1) aus einem viereckigen Gitter (3), das durch aneinander befestigte waagrechte (4) und senkrechte (5) starre Drähte gebildet ist, besteht und mit L-förmigen perforierten Vorsprüngen (6), die an den Ecken und am Zentrum über den senkrechten starren Drähten (5) befestigt sind, versehen ist; wobei die waagrechten starren Drähte (4) trapezförmige oder ellipsenförmige Töpfe (7) mittels eines oder zwei L-förmiger Flügel (8) tragen, welche am Rückenperimeter jedes Topfes (7) vorhanden sind, wobei jeder Flügel (8) ein zentrales rechteckiges Loch (9) umfasst und an seinen Enden mit einem Sperrvorsprung (10) versehen ist, worin jeder der besagten trapezförmigen oder ellipsenförmigen Töpfe (7) an seinem unteren Ende Löcher (11) aufweist, in welchen Stützbolzen (12) eines trapezförmigen Bodens (13) angebracht sind, wobei der Boden (13) mit Rändern (14) entlang seines seitlichen und vorderen Perimeters versehen ist, um das durch die Löcher (11) durchsickernde Wasser auf die Ebene des viereckigen Gitters (3) zu führen, nachdem über die Pflanzen (15) in den Töpfen (7) gegossen wurde.

## Revendications

1. Ensemble de récipients à végétation ornementale monté sur un assemblage (1) destiné à être fixé sur un mur (2) ou une structure verticale plate, optionnellement étanchéisée au préalable au moyen d'une couverture d'asphalte et/ou d'un mortier polymérique et comprenant des éléments d'exsudation ou de collection d'eau d'arrosage; **caractérisé en ce que** ledit assemblage (1) est constitué d'un écran quadrangulaire (3), formé de fils rigides horizontaux (4) et verticaux (5) fixés les uns aux autres en rectangle, étant pourvu de protubérances perforées (6), en forme de L, fixées aux sommets et au centre sur les fils rigides verticaux (5); les fils rigides horizontaux (4) portent des pots (7) de forme trapézoïdale ou ellipsoïdale placés à tout endroit de l'écran au moyen d'un ou deux ailerons (8) en forme de L, prévus sur le périmètre arrière de chaque pot (7), chaque aileron (8) contenant un trou central rectangulaire (9) et étant pourvu d'une saillie de blocage (10) à son extrémité, chacun desdits pots (7) de forme trapézoïdale ou ellipsoïdale possédant des trous (11) à son extrémité inférieure dans lesquels sont disposées des broches de support (12) d'une base trapézoïdale (13), la base (13) étant pourvue de rebords (14) le long de son périmètre latéral et frontal de façon à diriger l'eau s'infiltrant à travers les trous (11) sur le plan de l'écran quadrangulaire (3), après avoir giclé sur de la végétation (15) dans les pots (7).
